# FASCICULE DE BREVET EUROPEEN

(11) **EP 1 327 407 B1**
(45) Date de publication et mention de la délivrance du brevet: **22.09.2010**
(21) Numéro de dépôt: 02014628.8
(22) Date de dépôt: 02.07.2002
(51) Int. Cl.: A47J 31/40

(54) **Dispositif automatique pour l'extraction d'une substance**
Automatisches Gerät für die Extraktion von Substanzen
Automatic device for the extraction of substances

(30) Priorité: 10.01.2002 WO PCT/EP02/00325
(43) Date de publication de la demande: 16.07.2003
(73) Titulaire: SOCIETE DES PRODUITS NESTLE S.A., 1800 Vevey (CH)
(72) Inventeur: Yoakim, Alfred, 1806 St-Legier-La-Chiesaz (CH)
(74) Mandataire: Ducreux, Marie

(56) Documents cités:
- EP-A- 0 087 550
- EP-A- 0 891 734
- EP-A- 1 050 258
- EP-A- 1 089 240
- EP-A- 1 219 216
- FR-A- 1 410 288
- US-A- 3 260 190
- US-A- 3 470 812

## Description

La présente invention concerne un dispositif automatique pour l'extraction d'une substance pour la préparation d'une boisson à partir d'une capsule.

Il existe déjà sur le marché de nombreux dispositifs pour l'extraction d'une substance à partir d'une capsule ouverte ou fermée. Le brevet EP 242556 concerne déjà un dispositif d'extraction de cartouches fermées dans un porte-cartouche, dans lequel ledit porte-cartouches est engagé sur une tête d'extraction permettant alors l'extraction et l'obtention de la boisson souhaitée. Le problème avec ce dispositif est que le consommateur doit mettre la capsule dans le porte-cartouches et ensuite engager ledit porte-cartouches sur la tête d'extraction. C'est cette dernière manipulation qui cause problème, car il faut précisément engager le porte-cartouches et procéder au serrage suffisant pour avoir une bonne étanchéité lors de l'extraction. Le brevet US 3 260 190 divulgue un dispositif similaire au préambule de la revendication 1 de la présente demande.

Le but de la présente invention est de mettre à disposition du consommateur un dispositif, dans lequel la manipulation du consommateur est réduite au minimum et la fermeture du dispositif est faite automatiquement sans aucune intervention humaine, ce qui annule tout risque de défaut d'étanchéité.

La présente invention concerne un dispositif tel que défini par la revendication 1.

On peut extraire dans le dispositif selon l'invention aussi bien des capsules fermées, comme celles décrites dans le brevet EP 512'468 et EP 602'203 au nom du demandeur. On peut également utiliser le dispositif pour extraire d'autres sachets, capsules ou cartouches fermées. Il est également possible d'utiliser le dispositif selon l'invention pour des capsules ouvertes, par exemple des capsules en matière plastique ou des sachets en papier filtre, en non tissées.

La substance contenue dans la capsule fermée, ouverte ou autre est une substance pulvérulente pour la préparation d'une boisson. Cette substance est de préférence du café torréfié et moulu, mais peut aussi être du thé, du café soluble, un mélangé de café moulu et de café soluble, un produit chocolaté ou toute autre substance comestible deshydratée.

Il est possible avec le dispositif selon l'invention d'avoir un bloc logement pour capsules comprenant plusieurs logements pour la capsule à extraire. Ce qui signifie qu'on pourrait en une seule fois obtenir 1, 2, 3 ou plus de tasses de café : ce système serait particulièrement intéressant dans des cafés, restaurants et autres lieux publics , où la demande simultanée de tasses de café peut être grande. De manière préférentielle, on prévoit un dispositif avec de 1 à 4 logements.

Ce qui est important dans le dispositif selon l'invention, c'est que la tête d'extraction soit fixe. En effet, c'est cette partie qui est mécaniquement la plus compliquée, en raison de l'arrivée d'eau. Par contre, le tiroir avec bloc logement pour capsules est mobile : il faut des moyens de préhension sûrs et efficaces.

Ces moyens de préhension sont constitués de
- deux tiges de traction et une barre de montée de chaque côté de la tête d'extraction fixe et assujetties à la partie verticale fixe de l'arrière du châssis, de manière à former deux quadrilatères déformables, chaque barre de montée comprenant un crochet prévu pour s'engager sur la goupille de préhension solidaire du bloc logement lorsque le tiroir est en position de fermeture et une tige d'entrainement reliant les deux quadrilatères et
- un système de came permettant d'agir sur la tige d'entrainement pour déformer les quadrilatères et ainsi permettre à la barre de montée de soulever le bloc logement pour capsules vers la tête d'extraction fixe.

Lorsque le consommateur a chargé Le tiroir de la ou des capsules à extraire, ledit tiroir se ferme par un mouvement de translation : cette distance de translation est d'au moins deux fois le diamètre de la capsule à extraire.

D'autre part, quand le tiroir est fermé, les moyens de préhension permettent de lever le bloc logement pour capsules d'un angle au moins égal à la hauteur de la capsule à extraire, c'est-à-dire un angle de l'ordre de 10 à 20 °.

Comme déjà mentionné ci-dessus, il est possible aussi bien d'extraire des capsules ouvertes que des capsules fermées. Si on extrait des capsules ouvertes, il n'y a rien à ajouter au présent dispositif selon l'invention.

Par contre, si on extrait des capsules fermées, c'est-à-dire des capsules s'ouvrant par une montée en pression, il faut prévoir que chaque tête d'extraction comprend une cage à capsule avec soit une aiguille avec arrivée d'eau ou une arrivée d'eau avec des lames pour permettre la perforation de la partie supérieure de la capsule à extraire.

Toujours dans le cas de capsules fermées, il faut que le fond du logement pour la capsule à extraire comprenne des éléments en creux et en relief permettant l'ouverture du fond de la capsule par la montée en pression dans ladite capsule.

La suite de la description est faite en référence aux dessins sur lesquels :
Fig. 1 à 6 sont des vues en perspective du dispositif selon l'invention pendant les différentes phases de l'extraction d'une capsule,ledit dispositif comportant un bloc logement pour capsules avec deux logements,
Fig. 7 est une coupe d'une cage à capsule dans une première forme de réalisation,
Fig. 8 est une coupe d'une cage à capsule dans une seconde forme de réalisation et
Fig. 9 est une représentation schématique du fond d'un logement de capsule à extraire.

Le dispositif comprend un châssis (11) avec une partie horizontale (22) et une partie verticale (14) à l'arrière dudit châssis. Le tiroir (5) comprenant un bloc logement (6) pour capsules (10) est à translation horizontale sur la partie horizontale (22) précitée grâce à un guide (15) solidaire dudit tiroir (5). Le bloc logement (6) pour capsules comporte de chaque côté dudit système une goupille de préhension (18). La tête d'extraction fixe (4) est solidaire de la partie verticale (14) à l'arrière du châssis (11) grâce à une barre de jonction (16), ladite tête comprenant une cage à capsule (20). Les moyens de préhension sont constitués par deux quadrilatères déformables ABCD comprenant chacun une première tige de traction (13) solidaire en A de la partie verticale (14), une seconde tige de traction (3) solidaire en B de la première tige de traction (13), et une barre de montée (2) solidaire en C de la seconde tige de traction (3) et solidaire en D de la partie verticale (14). La barre de montée (2) comprend un prolongement (23) pourvu d'un crochet (19) susceptible de s'engager sur la goupille de préhension (18) du bloc logement (6) pour capsules. Pour mouvoir les moyens de préhension, on dispose d'une came (8) comprenant un moteur (9), ladite came étant placée entre les deux barres de jonction (16) de la tête d'extraction fixe (4). Finalement, la tige d'entrainement (1) disposée entre les deux quadrilatères ABCD coopère avec la came (8) pour la montée de la barre de montée (2).

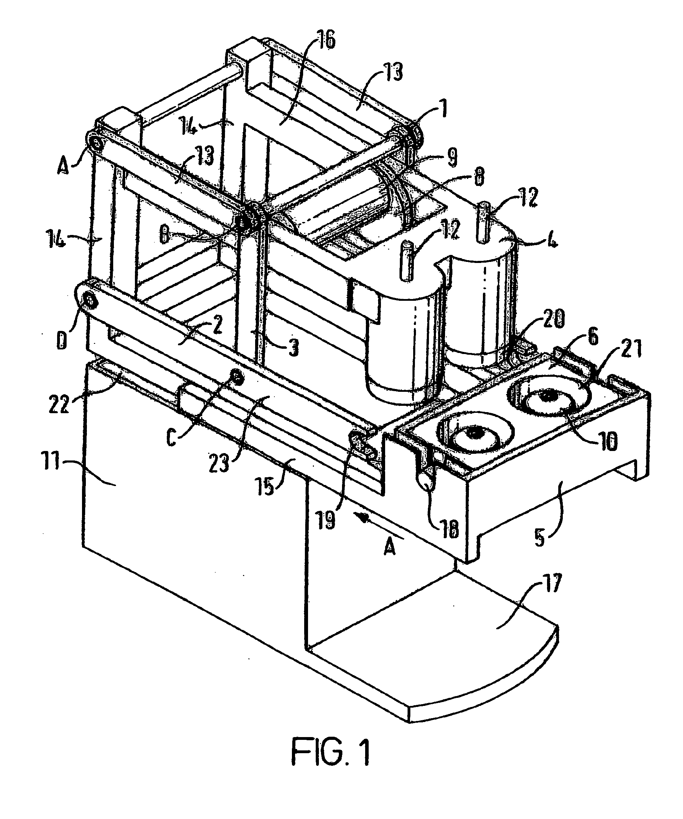

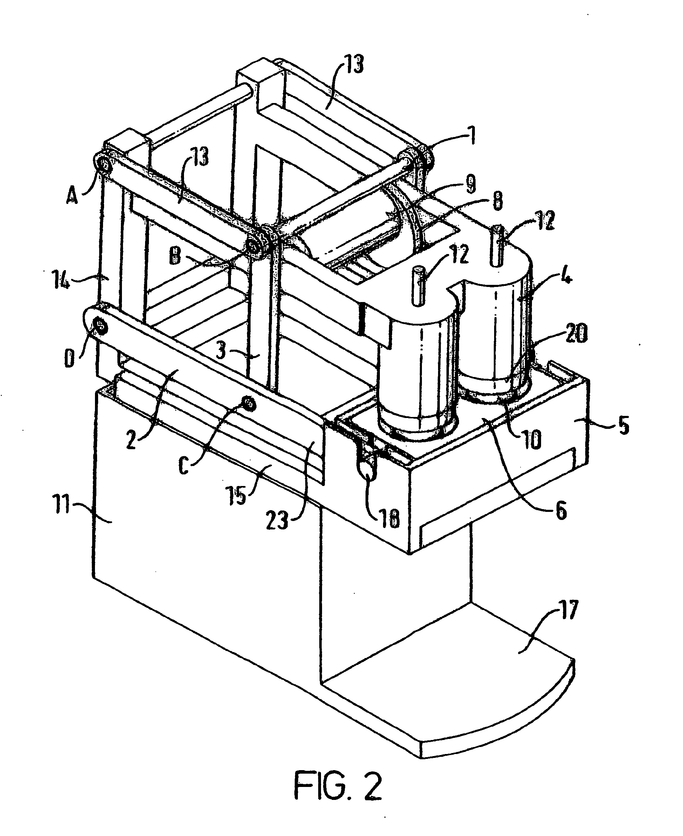

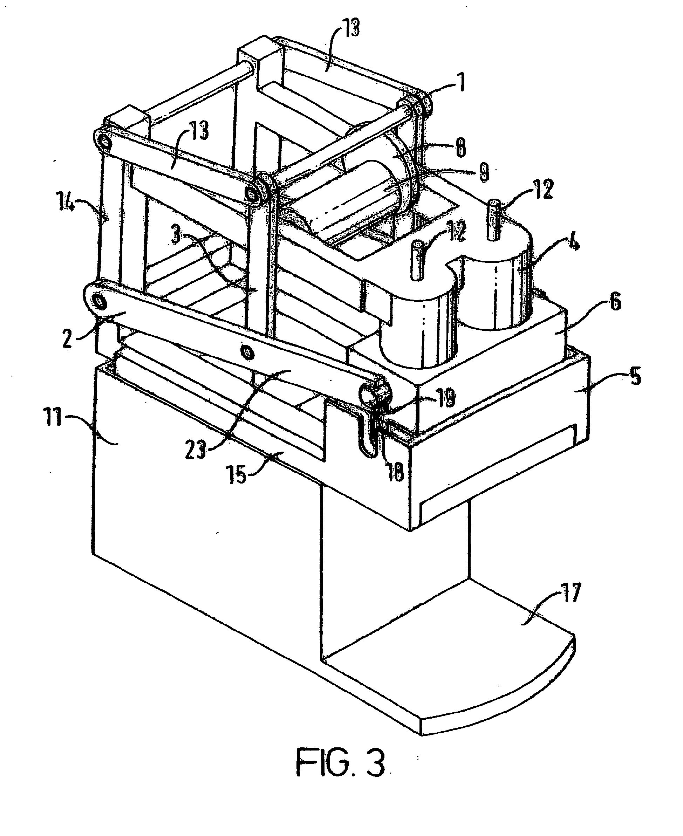

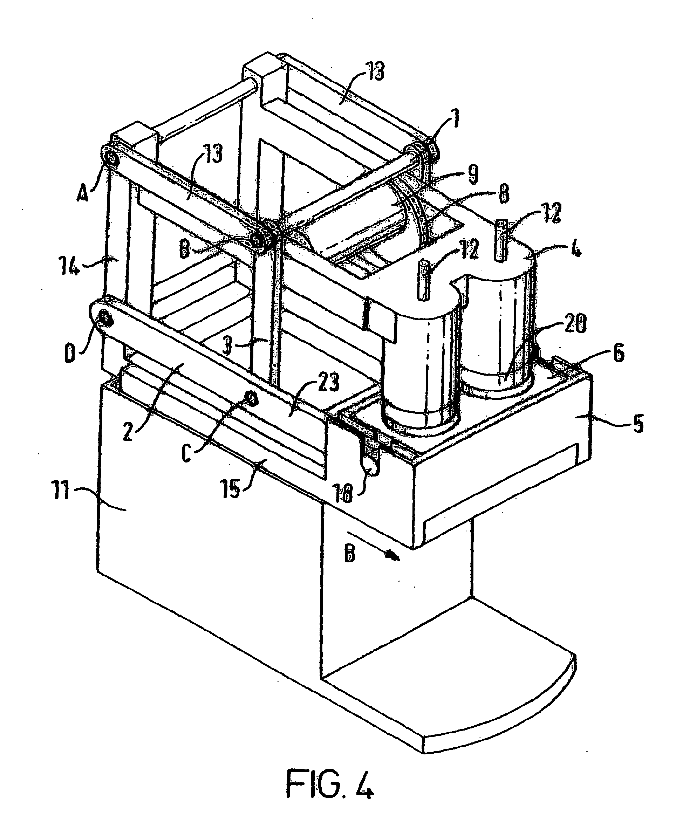

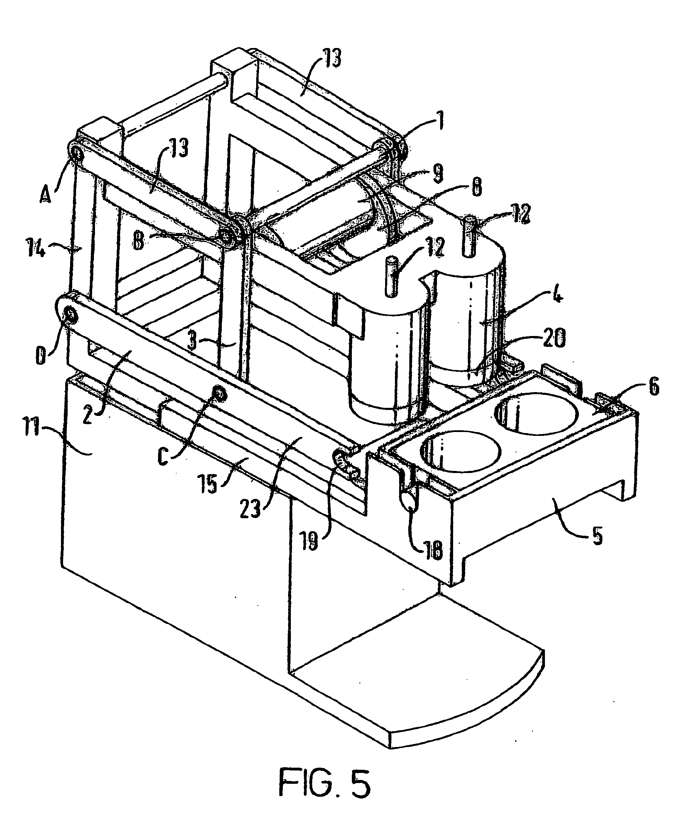

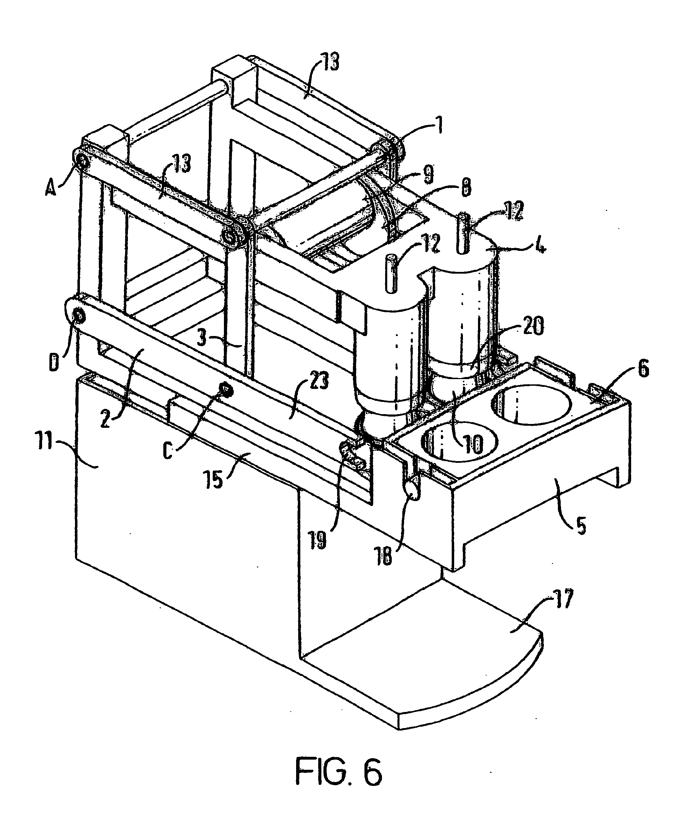

Le fonctionnement du dispositif est le suivant en suivant les différentes phases depuis la figure 1 jusqu'à la figure 6 : Dans la disposition de la figure 1, le consommateur place les deux capsules à extraire (10) dans les logements (21). A ce moment, une cellule (non représentée) fait démarrer le processus d'extraction desdites capsules : le tiroir (5) se ferme par un mouvement de translation selon la flèche A, le guide (15) glissant sur la partie horizontale (22) du châssis (11). Lors de ce mouvement, le crochet (19) de la barre de montée (2) va s'engager sur la goupille de préhension (18) du bloc logement (6). Lorsque le tiroir est en bout de course, on arrive à la disposition de la figure 2. A ce moment là, c'est la came (8) qui va se mettre en action pour soulever le bloc logement (6) pour capsules : le moteur (9) fait démarrer la came (8). Dans son mouvement de rotation, elle va pousser sur la tige d'entrainement (1), de manière à déformer le quadrilatère ABCD, c'est-à-dire pour que la barre de montée (2) soulève le bloc logement (6) pour capsules contre la cage à capsule (20). En bout de course de la came, le système est bien étanche et l'eau chaude arrive par les conduits (12), passe dans la capsule (10) pour s'écouler dans les deux tasses disposées sur la partie avant (17) du châssis. Cette étape d'extraction est représentée sur la figure 3. En fin d'extraction, le moteur (9) fait tourner la came (8) pour permettre la redescente de la barre de montée (2) et en même temps du bloc logement (6) des capsules. On est alors dans la disposition de la figure 4. En même temps que la barre de montée (2) redescend, des moyens de retenue (non représentés) de capsule dans la cage à capsule (20) sont actionnés, de sorte que le tiroir (5) puisse s'ouvrir sans les capsules usagées. Ensuite , le tiroir (5) s'ouvre dans le sens de la flèche B , de sorte qu'on arrive dans la disposition de la figure 5 : la capsule est encore dans la cage à capsules (20), maintenue grâce aux moyens de retenue précités. Ces moyens sont par exemple un doigt pour chaque cage à capsule (20). La figure 6 montre finalement le dégagement de la capsule (10) de la cage à capsule permettant à ladite capsule extraite de tomber dans le réservoir intérieur du châssis (11): pour ce faire, le doigt de retenue se rétracte pour libérer la capsule. Le dispositif est ainsi prêt pour recharger avec deux nouvelles capsules (10) à extraire. Si le consommateur ne souhaite qu'un seul café, il place une seule capsule et l'eau arrivant par le conduit (12) n'arrivera que sur une seule cage à capsule (20). A contrario, il est aussi possible selon l'invention de prévoir 3, 4 et éventuellement plus de cage à capsule (20) par dispositif.

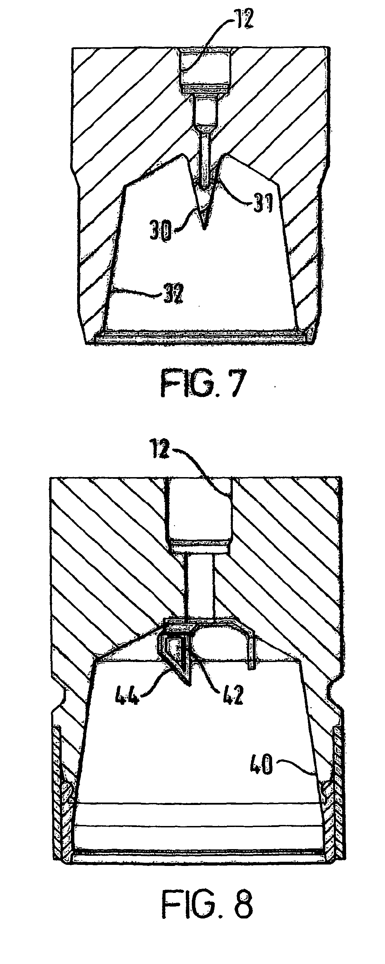

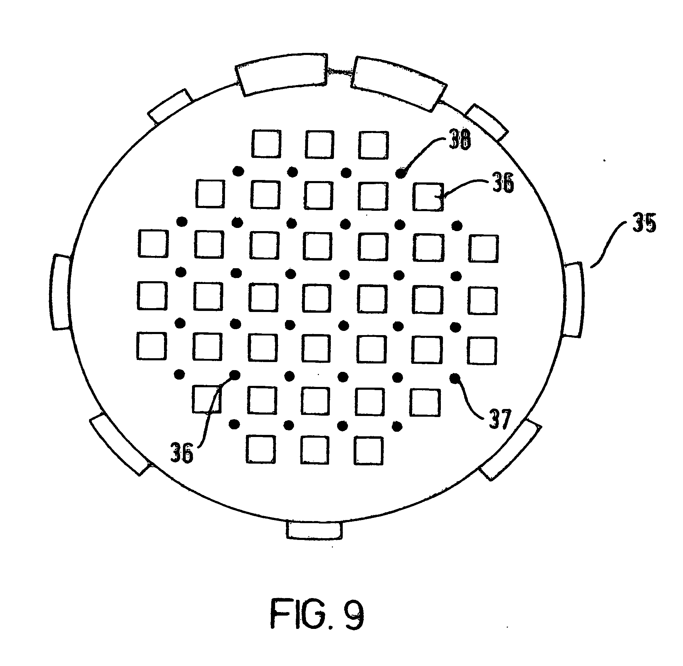

Les figures 7 et 8 donnent des coupes partielles de deux modes de réalisation de cage à capsules. La cage de la figure 7 montre le conduit d'arrivée d'eau (12) et l'aiguille d'injection d'eau (30). La capsule à extraire (10) est dans le logement (32) et l'aiguille (30) perce le haut de ladite capsule. L'eau chaude arrive par le conduit (12) et par les trous (31) dans l'aiguille (30). Lorsque la cage à capsule est fermée, on se trouve dans la position de la figure 3 précédente. La figure 9 montre le fond du logement (35) de capsule. Ce fond comprend des éléments en relief (36) et en creux (37). C'est dans les creux que se trouvent les orifices (38) permettant le passage du café. Lorsque l'eau arrive dans la capsule (10), on a une montée en pression dans ladite capsule , ce qui plaque le fond de la capsule contre les éléments en relief (36) et en creux (37) et lorsqu'on atteint la tension de rupture, l'opercule du fond de la capsule se déchire sur lesdits éléments en relief et en creux et le café passe et coule par les orifices (38).

La figure 8 montre une seconde forme de réalisation de cage à capsules. Le conduit (12) permet l'arrivée d'eau chaude et ladite cage comprend un logement (40) pour la capsule à extraire. Dans le logement, on a un système de perçage (41) avec des lames ajourées (42). Lorsque la cage à capsules est fermée, on se trouve dans la position de la figure 3 précédente : le haut de la capsule est percé par les lames (42), l'eau arrive par le conduit (12) et la montée en pression dans la capsule, va faire que la membrane inférieure de ladite capsule va se déchirer contre les éléments en relief et en creux visibles sur la figure 9.

Lorsqu'on a la cage à capsules des figures 7 et 8, on a toujours le même fond de logement de capsule, à savoir celui de la figure 9.

## Revendications

1. Dispositif pour l'extraction d'une substance pour la préparation d'une boisson à partir d'une capsule (10) comprenant :
- un châssis (11) avec une partie plane horizontale (22) et une partie verticale (14) à l'arrière dudit châssis (11).
- un tiroir (5) susceptible d'être déplacé en translation horizontale sur la partie plane du châssis (11) entre une position d'ouverture et de fermeture et comportant dans ledit tiroir un bloc logement (6) pour capsules (10) avec au moins un logement (21) pour la capsule (10) à extraire et une goupille de préhension (18) de chaque côté du bloc logement,
- une tête d'extraction fixe (4) de la capsule (10) montée sur le châssis (11) avec au moins une cage à capsule (20), ladite cage étant en regard du logement (21) pour la capsule (10) lorsque le tiroir (5) est en position de fermeture,
- des moyens de préhension (1,2,3,8,9,13,14,18,19,23) permettant lorsque le tiroir (5) est en position de fermeture de lever le bloc logement (6) pour capsules (10) grâce à la goupille de préhension pour amener la capsule (10) à extraire dans la cage à capsule (20),
**caractérisé en ce que** la goupille de préhension (18) est solidaire du bloc logement (6) et **en ce que** les moyens de préhension comprennent deux tiges de traction (3,13) et une barre de montée (2) de chaque côté de la tête d'extraction (4) fixe et assujetties à la partie verticale (14) fixe de l'arrière du châssis (11), de manière à former deux quadrilatères déformables (A,B,C,D), chaque barre de montée comprenant un crochet (19) prévu pour s'engager sur la goupille de préhension (18) solidaire du bloc logement (6) lorsque le tiroir (5) est en position de fermeture et une tige d'entraînement (1) reliant les deux quadrilatères (A,B,C,D), un système de came (8, 9) permettant d'agir sur la tige d'entraînement pour déformer les quadrilatères et ainsi permettre à la barre de montée de soulever le bloc logement pour capsules (10) vers la tête d'extraction fixe.

2. Dispositif selon la revendication 1, dans lequel le bloc logement (6) pour capsules (10) comprend de un à quatre logements (21) pour la capsule (10) à extraire.

3. Dispositif selon l'une des revendications 1 à 2, dans lequel la distance de translation du tiroir (5) est d'au moins deux fois le diamètre de la capsule (10) à extraire.

4. Dispositif selon l'une des revendications 1 à 43, dans lequel les moyens de préhension (1, 2, 3, 8, 9, 13, 14, 18, 19, 23) permettent de lever le bloc logement (6) pour capsules (10) d'un angle au moins égal à la hauteur de la capsule (10) à extraire.

5. Dispositif selon l'une des revendications 1 à 4, dans lequel la capsule (10) à extraire est une capsule ouverte.

6. Dispositif selon l'une des revendications 1 à 4, dans lequel la capsule (10) à extraire est une capsule fermée, auquel cas chaque tête d'extraction (4) comprend une cage à capsule (20) avec soit une aiguille (30) avec arrivée d'eau (12, 31) ou une arrivée d'eau (12) avec des lames (42) pour permettre la perforation de la partie supérieure de la capsule (10) à extraire.

7. Dispositif selon la revendication 6, dans lequel le fond du logement (35) pour la capsule (30) à extraire comprend des éléments en creux (37) et en relief (36) permettant l'ouverture du fond de la capsule (10) par la montée en pression dans ladite capsule (10).

## Claims

1. Device for extracting a substance for the preparation of a beverage from a capsule (10) comprising:
- a mounting unit (11) with a horizontal planar part (22) and a vertical part (14) to the rear of said mounting unit (11),
- a drawer (5) capable of being displaced in horizontal translation on the planar part of the mounting unit (11) between an open position and a closed position and comprising in said drawer a housing unit (6) for capsules (10) with at least one housing (21) for the capsule (10) to be extracted and a gripping pin (18) on each side of the housing unit,
- a fixed extraction head (4) for the capsule (10) mounted on the mounting unit (11) with at least one capsule cage (20), said cage being opposite the housing (21) for the capsule (10) when the drawer (5) is in the closed position,
- gripping means (1, 2, 3, 8, 9, 13, 14, 18, 19, 23) making it possible, when the drawer (5) is in the closed position, to lift the housing unit (6) for capsules (10) using the gripping pin to move the capsule (10) to be extracted into the capsule cage (20),
**characterised in that** the gripping pin (18) is fixed to the housing unit (6) and **in that** the gripping means comprise two pull rods (3, 13) and a lifting bar (2) on each side of the fixed extraction head (4) and fastened to the fixed vertical part (14) of the rear of the mounting unit (11) so as to form two deformable four-sided assemblies (A, B, C, D), each lifting bar comprising a hook (19) provided to be engaged on the gripping pin (18) fixed to the housing unit (6) when the drawer (5) is in the closed position and a driving rod (1) connecting the two four-sided assemblies (A, B, C, D), a cam system (8, 9) making it possible to act on the driving rod to deform the four-sided assemblies and thus permit the lifting bar to raise the housing unit for capsules (10) towards the fixed extraction head.

2. Device according to Claim 1, in which the housing unit (6) for capsules (10) comprises from one to four housings (21) for the capsule (10) to be extracted.

3. Device according to one of Claims 1 to 2, in which the distance in translation of the drawer (5) is at least twice the diameter of the capsule (10) to be extracted.

4. Device according to one of Claims 1 to 3, in which the gripping means (1, 2, 3, 8, 9, 13, 14, 18, 19, 23) permit the housing unit (6) for capsules (10) to be lifted by an angle which is at least equal to the height of the capsule (10) to be extracted.

5. Device according to one of Claims 1 to 4, in which the capsule (10) to be extracted is an open capsule.

6. Device according to one of Claims 1 to 4, in which the capsule (10) to be extracted is a sealed capsule, in which case each extraction head (4) comprises a capsule cage (20) with either a needle (30) with a water inlet (12, 31) or a water inlet (12) with blades (42) to permit the perforation of the upper part of the capsule (10) to be extracted.

7. Device according to Claim 6, in which the bottom of the housing (35) for the capsule (10) to be extracted comprises hollow elements (37) and protruding elements (36) permitting the opening of the bottom of the capsule (10) by the rise in pressure in said capsule (10).

## Patentansprüche

1. Vorrichtung zur Extraktion einer Substanz zur Herstellung eines Getränks aus einer Kapsel (10), welche Vorrichtung aufweist:
- ein Chassis (11) mit einem horizontalen ebenen Teil (22) und einem vertikalen Teil (14) an der Rückseite dieses Chassis (11),
- ein Schubfach (5), das in horizontaler Vorschubbewegung auf dem ebenen Teil (22) des Chassis (11) zwischen einer Öffnungsposition und einer Schließposition verschoben werden kann und in diesem Schubfach einen Aufnahmeblock (6) für Kapseln (10) mit mindestens einer Aufnahme (21) für die der Extraktion zu unterziehende Kapsel und einem Greifzapfen (18) auf jeder Seite des Aufnahmeblocks aufweist,
- einen feststehenden Extraktionskopf (4) der Kapsel (10), der auf dem Chassis (11) mit mindestens einem Kapselhalter (20) angebracht ist, wobei sich dieser Halter der Aufnahme (21) für die Kapsel (10) gegenüber befindet, wenn sich das Schubfach (5) in Schließposition befindet,
- Greifmittel (1, 2, 3, 8, 9, 13, 14, 18, 19, 23), die es, wenn sich das Schubfach (5) in Schließposition befindet, ermöglichen, den Aufnahmeblock (6) für Kapseln (10) mittels des Greifzapfens anzuheben, um die der Extraktion zu unterziehende Kapsel in den Kapselhalter (20) zu bringen, der Greifzapfen (18) fest mit dem Aufnahmeblock (6) verbunden ist, und dass die Greifmittel auf jeder Seite des feststehenden Extraktionskopfs (4) zwei Zugstangen (3, 13) und eine Hebestange (2) umfassen, die an dem feststehenden vertikalen Teil (14) an der Rückseite dieses Gehäuses (11) befestigt sind, so dass zwei verformbare Vierecke (A, B, C, D) gebildet werden, wobei jede Hebestange einen Haken (19) aufweist, der dazu vorgesehen ist, in Eingriff mit dem fest mit dem Aufnahmeblock (6) verbundenen Greifzapfen (18) zu kommen, wenn sich das Schubfach (5) in Schließposition befindet, und wobei eine Antriebsstange (1) die beiden Vierecke (A, B, C, D) miteinander verbindet, wobei ein Nockensystem (8, 9) es ermöglicht, auf die Antriebsstange einzuwirken, um die Vierecke zu verformen und so zu ermöglichen, dass die Hebestange den Aufnahmeblock für Kapseln (10) zu dem feststehenden Extraktionskopf anhebt.

2. Vorrichtung nach Anspruch 1, bei der der Aufnahmeblock (6) für Kapseln (10) eine bis vier Aufnahmen (21) für die der Extraktion zu unterziehende Kapsel (10) aufweist.

3. Vorrichtung nach einem der Ansprüche 1 bis 2, bei der die Schubstrecke des Schubfachs (5) mindestens das Zweifache des Durchmessers der der Extraktion zu unterziehenden Kapsel (10) beträgt.

4. Vorrichtung nach einem der Ansprüche 1 bis 3, bei der die Greifmittel (1, 2, 3, 8, 9, 13, 14, 18, 19, 23) es ermöglichen, den Aufnahmeblock (6) für Kapseln (10) um einen Winkel anzuheben, der mindestens der Höhe der der Extraktion zu unterziehenden Kapsel (10) entspricht.

5. Vorrichtung nach einem der Ansprüche 1 bis 4, bei der die der Extraktion zu unterziehende Kapsel (10) eine offene Kapsel ist.

6. Vorrichtung nach einem der Ansprüche 1 bis 4, bei der die der Extraktion zu unterziehende Kapsel (10) eine geschlossene Kapsel ist, wobei in diesem Fall jeder Extraktionskopf (4) einen Kapselhalter (20) mit entweder einer Nadel (30) mit Wasserzuführung (12, 31) oder einer Wasserzuführung (12) mit Schneiden (42) aufweist, um die Perforierung des oberen Teils der der Extraktion zu unterziehenden Kapsel (10) zu ermöglichen.

7. Vorrichtung nach Anspruch 6, bei der der Boden der Aufnahme (35) für die der Extraktion zu unterziehende Kapsel (10) Hohlelemente (37) und Reliefelemente (36) aufweist, die das Öffnen des Bodens der Kapsel (10) durch Druckanstieg in dieser Kapsel (10) ermöglichen.
